# EUROPÄISCHE PATENTANMELDUNG

(11) **EP 1 662 775 A1**
(43) Veröffentlichungstag der Anmeldung: **31.05.2006**
(21) Anmeldenummer: 05004413.0
(22) Anmeldetag: 01.03.2005
(51) Int. Cl.: H04N 5/222

(54) **Handlicher Vorschau-Monitor zum Betrachten eines Kamerabildes am Filmset**

(30) Priorität: 25.11.2004 DE 202004018288 U
(71) Anmelder: Grundt, Sebastian, 81245 München (DE)
(72) Erfinder: Grundt, Sebastian, 81245 München (DE)

(57) **Zusammenfassung**

Vorschau-Monitor zum Betrachten eines Kamerabildes am Filmset, der sich als Gehäuse eines Micro-Koffers aus Kunststoff (z.B. US-Pat. No.: 6,698,608B2; US-Pat. No.: D464,196S oder vergleichbare Ausführungen) bedient, neben einem Empfänger zum drahtlosen Empfang eines Videosignals über eine vollständig im Gehäuse integrierte Empfangsantenne sowie über einen vollständig im Gehäuse integrierten Akkuschacht zur Aufnahme des für die Energieversorgung erforderlichen Akkumulators verfügt und dank seiner Handlichkeit in bezug auf Größe, Form und Gewicht gut und ermüdungsfrei in der Hand liegt.

Ein Flachbildschirm mit Beschaltung ist derart im Kofferdeckel untergebracht, daß er nach dem Öffnen des Koffers gut sichtbar ist, Empfänger mit Antenne, Akkuschacht, weitere zum Betrieb des Gerätes erforderliche Komponenten sowie, -- je nach Ausführung --, ein Videorecorder mit Speicherkarte als Aufzeichnungsmedium befinden sich im Unterteil des Koffers.

Je nach Anforderung und Einsatzbereich sind Ausführungen in verschiedenen Größen möglich, wobei der grundlegende Aufbau und das Verhältnis von Form, Größe und Gewicht im wesentlichen unverändert bleibt.

## Beschreibung

Die in Patentanspruch 1-5 beschriebene Erfindung bezieht sich auf das Gebiet der Videomonitore und im speziellen auf Geräte, die sich dank ihrer Handlichkeit und ihrer technischen Eigenschaften wie Akkubetrieb und drahtlose Bildübertragung zum Einsatz als Vorschau-Monitor am Filmset eignen.

Als Vorschau-Monitor dieser Art kommen in der Praxis am Filmset Geräte zur Anwendung, die es ermöglichen, ein Videobild, welches auf einer Frequenz im UHF-Bereich gesendet wird, zu empfangen, auf dem integrierten Bildschirm anzusehen, mit dem integrierten MiniDV Videorecorder aufzuzeichnen und wiederzugeben, und sich dabei dank Akkubetrieb frei zu bewegen. Außerdem kann das aufgezeichnete Bildmaterial mittels der integrierten IEEE 1394 (Firewire) -Schnittstelle auf einen Computer übertragen und mit entsprechender Software weiter bearbeitet werden. Diese für den Heimanwender konzipierten Geräte weisen allerdings einige Nachteile auf, die den Einsatz am professionellen Filmset erschweren und einschränken. So sind sie etwa recht stoßempfindlich und reagieren bedingt durch den Bandrecorder sehr sensibel auf Feuchtigkeit. Die Handlichkeit ist durch den außen am Gerät angebrachten Akku sowie die abstehende und in ausgezogenem Zustand recht weit ausladende Antenne des Empfängers eingeschränkt und nach dem Einschalten des Gerätes werden erst für einige Sekunden systemeigene Informationen angezeigt, bevor man das empfangene Bild sehen kann. Darüber hinaus ist die Antenne bedingt durch ihre Länge besonders gefährdet, beschädigt zu werden, was neben dem dabei entstehenden Schaden zu Beeinträchtigungen in der Empfangsqualität des zu betrachtenden und aufzuzeichnenden Bildmaterials führen kann.

Ziel der in Patentanspruch 1-5 beschriebenen Erfindung ist es, einen handlichen Vorschau-Monitor herzustellen, der ein über eine Funkverbindung gesendetes Videobild empfangen und anzeigen, und ― je nach Ausführungsvariante des Gerätes ― autzeichnen und wiedergeben kann, dank Energieversorgung über Akku freie Beweglichkeit ermöglicht, in bezug auf Form, Größe und Gewicht erhebliche Vorteile gegenüber handelsüblichen Geräten dieser Art bietet und darüber hinaus die genannten Nachteile vermeidet.

Dieses Ziel wird mit den in den Patentansprüchen 1-5 genannten Merkmalen erreicht.

Folgende Vorteile werden mit der genannten Erfindung erzielt:
■ Handlichkeit durch die abgerundete Form des Gehäuses (z. B US-Pat. No.: 6,698,608B2; US-Pat. No.: D464,196S) in günstigem Verhältnis zu Größe und Gewicht.
■ Hohe Betriebssicherheit durch innen liegende Antenne, schlagfestes und in geschlossenem Zustand wasserdichtes Gehäuse sowie robusten Aufbau.
■ Durch Einsatz von Speicherkarten (Flashkarten) als Speichermedium zur Bildaufzeicnung sofortiges Auffinden jeder aufgezeichneten Videosequenz sowie Unempfindlichkeit gegen hohe Luftfeuchtigkeit (je nach Ausführungsvariante).
■ Legaler Betrieb auch mit nicht öffentlich ausgestrahltem Bildmaterial durch die Nutzungsmöglichkeit freigegebener Frequenzen zur Bildübertragung.
■ Hohe Flexibilität bei Kundenwünschen in bezug auf spezielle Bildübertragungstechnologien/Funkfrequenzen durch diskreten Aufbau mit austauschbaren Einzelkomponenten.
■ Lange Akkulaufzeit durch automatisches Einschalten des Gerätes durch Öffnen des Deckels und Ausschalten durch Schließen des Deckels.
■ Nach Einschalten (Öffnen) sofort ohne Einschränkungen sichtbares empfangenes Bild.

Im folgenden wird die Erfindung anhand eines Ausführungsbeispiels veranschaulicht:

Dem erfindungsgemäßen Gerät liegt als Gehäuse ein Micro-Koffer aus Kunststoff (z.B. US-Pat. No.: 6,698,608B2; US-Pat. No.: D464,196S oder vergleichbare Ausführungen) zugrunde. Das beschriebene Ausführungsbeispiel bedient sich eines derartigen Koffers mit den Außenabmessungen 190mm x 128mm x 54mm, in dessen Deckel ein Flachbildschirm derart eingebaut ist, dass dahinter die nötige Beschaltung (wie Controllerboard und Backlight-Inverter) angebracht ist, der Flachbildschirm bei geöffnetem Kofferdeckel gut sichtbar ist (ähnlich einem Laptop-Computer) und durch eine Abdeckung gehalten und geschützt wird, die im Bereich der Bildfläche des Bildschirms transparent ist und die ganze Fläche des Kofferdeckels abdeckt. Im Unterteil sind ein Empfängermodul mit Empfangsantenne zum Empfang des zu betrachtenden Videobildes, ein von oben zugänglicher Akkuschacht zur Aufnahme des Akkumulators zur Energieversorgung der Komponenten, ein Bedienteil zum Einstellen der Bildschirmfunktionen (z.B. Helligkeit, Kontrast) sowie weitere für den Betrieb des Gerätes erforderliche Komponenten angeordnet, ebenfalls gehalten und geschützt durch eine Abdeckung, in die ein Schalter derart integriert ist, dass er durch das Öffnen und Schließen des Kofferdeckels bedient wird, wodurch sichergestellt ist, dass die Komponenten bei geschlossenem Kofferdeckel ausgeschaltet sind und eine unkontrollierte Entladung des Akkumulators vermieden wird. Der Akkuschacht ist so beschaffen, dass ein schneller Akkuwechsel mit wenigen Handgriffen möglich ist, die Bedienelemente des Empfängermoduls (z.B. Kanalwahlschalter) sind durch die genannte Abdeckung bedienbar. Ein Flachbandkabel, welches so beschaffen ist, dass es sich beim Schließen des Kofferdeckels kontrolliert faltet und nicht eingeklemmt wird, verbindet die Komponenten im Unterteil des Koffers mit denen im Kofferdeckel.

Auch andere Ausführungsvarianten sind möglich, etwa unterschiedliche Größen und Versionen mit zusätzlich integriertem Videorecorder zum Aufzeichnen und Wiedergeben des zu betrachtenden Videobildes mittels Speicherkarte (Flashkarte), IEEE 1394 (Firewire) Schnittstelle zur Übertragung der Bilddaten auf einen Computer.

## Patentansprüche

1. Handlicher Vorschau-Monitor zum Betrachten eines Kamerabildes am Filmset, **dadurch gekennzeichnet, dass** ein Kunststoff-Schalenkoffer als Gehäuse dient, in dessen Deckel ein Flachbildschirm mit Beschaltung derart eingebaut ist, dass das zu betrachtende Bild sofort nach Öffnen des Kofferdeckels sichtbar ist und durch Verstellen der Kofferdeckelposition Lichtreflexe auf dem Flachbildschirm vermieden werden können.

2. Handlicher Vorschau-Monitor nach Anspruch 1, **dadurch gekennzeichnet, dass** der Empfänger zum Empfang des zu betrachtenden Bildes einschließlich Antenne, der Akkuschacht für den Akkumulator zur Energieversorgung, und -- je nach Ausführungsvariante des Gerätes -- der Recorder zum Aufzeichnen und Wiedergeben des zu betrachtenden Bildes sowie weitere für den Betrieb dieses Gerätes erforderliche Komponenten vollständig innerhalb des Koffers integriert sind.

3. Handlicher Vorschau-Monitor nach Anspruch 1, **dadurch gekennzeichnet, dass** die einzelnen Komponenten über einen Schalter mit Energie versorgt werden, der durch den Deckel des zugrundeliegenden Koffers ausgelöst wird, wodurch die Geräte bei geschlossenem Deckel ausgeschaltet sind.

4. Handlicher Vorschau-Monitor nach Anspruch 1, **dadurch gekennzeichnet, dass** der Akkuschacht bei geöffnetem Koffer frei zugänglich ist und sich der Akku für den Akkuwechsel leicht entriegeln, herausnehmen und einsetzen läßt.

5. Handlicher Vorschau-Monitor nach Anspruch 1, **dadurch gekennzeichnet, dass** er in geschlossenem Zustand wasserdicht bis 2 m Tauchtiefe und in geöffnetem Zustand (Betriebszustand) spritzwassergeschützt ist.
